# EUROPEAN PATENT APPLICATION

(11) **EP 4 756 748 A1**
(43) Date of publication of application: **10.06.2026**
(21) Application number: 24218344.0
(22) Date of filing: 09.12.2024
(51) Int. Cl.: G06V 40/20, G06V 10/771

(54) **METHOD, SYSTEM AND COMPUTER PROGRAM FOR DETERMINING AN ACTION**

(71) Applicant: Yokogawa Electric Corporation, Tokyo 180-8750 (JP)
(72) Inventor: Lubbe, Felix, 1265 Kobenhavn (DK)
(74) Representative: Zimmermann, Tankred Klaus

(57) **Abstract**

Various examples of the present disclosure relate to a computer-implemented method, a system, and a computer program or non-transitory computer-readable medium for determining an action. The method comprises obtaining (110) a sequence of 3D skeletal model representations of an entity, generating (140), using the sequence of 3D skeletal model representations of the entity, at least one sequence of 2D skeletal model representations of the entity showing the skeletal model of the entity from at least one perspective relative to the entity, providing (160) the at least one sequence of 2D skeletal model representations of the entity to a 2D action recognition model, and providing (190) information on an action being performed by the entity based on an output of the 2D action recognition model.

## Description

### Technical Field

Various examples of the present disclosure relate to a computer-implemented method, a system, and a computer program or non-transitory computer-readable medium for determining an action.

### Background

Human action recognition has become an important task in various computer vision applications, including human-computer interaction, video surveillance, sports analytics, and robotics. The ability to accurately understand human actions from visual data is vital for the development of intelligent systems capable of interacting with or responding to human activities in real-time. A popular approach to achieve this goal involves human pose estimation, where the positions of major joints in the human body are tracked and represented as a skeletal model. The development of skeleton-based action recognition systems has been driven by advancements in both hardware and machine learning algorithms, but challenges remain in improving the precision, efficiency, and adaptability of these systems. Current methods for action recognition can broadly be categorized into:
- image-based action recognition,
- 2+1D skeleton-based action recognition, and
- 3D skeleton-based action recognition

Image-based action recognition relies on analyzing sequences of images, often in the form of video, to infer human actions. In these systems, RGB (Red, Green, Blue) images or RGB-D (RGB with depth information) data are the primary inputs. Machine learning models, particularly convolutional neural networks (CNNs), have been widely applied to extract visual features from these images, which are then used to classify actions. In the case of RGB-D data, depth information adds an extra layer of spatial context by providing insight into the distance between the subject and the camera, potentially improving the accuracy of action recognition. In general, image-based methods generally require large amounts of labeled data for training, and they tend to be computationally expensive due to the need for processing large quantities of pixel-level information. Furthermore, they are sensitive to variations in lighting, viewpoint, and occlusion, which can hinder performance in real-world applications.

To address some of the limitations of image-based methods, researchers have developed approaches that leverage skeletal representations of human poses. In 2+1D skeleton-based action recognition, actions are modeled using two spatial dimensions (X and Y coordinates of the joints in the image plane) combined with a temporal dimension (time). The skeleton comprises a set of key points corresponding to major joints of the human body, and the temporal evolution of these key points is analyzed to recognize actions. This method effectively reduces the dimensionality of the problem, as it abstracts away much of the pixel-level detail, focusing instead on the dynamics of joint movement. Recurrent neural networks (RNNs), long short-term memory networks (LSTMs), and graph convolutional networks (GCNs) have been applied in this context to model the temporal dependencies and spatial relationships between joints. While 2+1D methods can be computationally efficient and more robust to visual variations compared to image-based methods, they still face challenges related to handling occlusions, view dependency, and generalization across different individuals.

Recent advances in 3D sensing technologies, such as depth cameras and multi-view setups, have enabled the development of 3D skeleton-based action recognition systems. In this approach, the spatial representation of human joints is extended to three dimensions (X, Y, and Z coordinates), providing a richer description of human poses. By tracking joints in 3D space, these systems can capture subtle nuances in human movement that may not be discernible in 2D representations, leading to more accurate action recognition. 3D skeleton-based systems are particularly useful in scenarios where depth information is critical, such as recognizing actions with significant vertical movement or differentiating between similar actions performed at varying distances from the observer. The primary challenge in 3D skeleton-based action recognition lies in obtaining reliable 3D joint positions, especially in the presence of occlusions or noisy sensor data. Additionally, the increased dimensionality of the input data requires more sophisticated models and greater computational resources, which can limit real-time performance in some applications.

In summary, existing AR (Action Recognition) implementations either rely on video input or 2D pose estimation skeletons and are subject to limitation because of the bias inherent in the static perspective of their training data. For 3D approaches, there is a limited amount of academic and patent literature available:
- D. Weinland, E. Boyer and R. Ronfard, "Action Recognition from Arbitrary Views using 3D Exemplars," 2007 IEEE 11th International Conference on Computer Vision, Rio de Janeiro, Brazil, 2007, pp. 1-7, doi: 10.1109/ICCV.2007.4408849,
- Hossein Rahmani, Ajmal Mian. "3D Action Recognition From Novel Viewpoints". Proceedings of the IEEE Conference on Computer Vision and Pattern Recognition (CVPR), 2016, pp. 1506-1515,
- Bin Ren, Mengyuan Liu, Runwei Ding, Hong Liu. A Survey on 3D Skeleton-Based Action Recognition Using Learning Method. Cyborg Bionic Syst. 2024;5:0100. DOI: 1 0.34133/cbsystems.01 00,
- Rajasegaran, Jathushan and Pavlakos, Georgios and Kanazawa, Angjoo and Feichtenhofer, Christoph and Malik, Jitendra. "On the Benefits of 3D Pose and Tracking for Human Action Recognition". Proceedings of the IEEE/CVF Conference on Computer Vision and Pattern Recognition, 2023, pp. 640-649,
- Haodong Duan, Jiaqi Wang, Kai Chen, Dahua Lin. PYSKL: Towards Good Practices for Skeleton Action Recognition, 2022. arXiv:2205.09443.)
- CN1 11 160164A,
- CN110263720A,
- CN114627557A and CN111339942A.

The reason for the limited amount of literature is likely three-fold: An implementation of a 3D skeleton system requires multi-perspectival datasets or equivalent synthetic data, and the implementation of a 3D reconstruction system from 2D perspectives is computationally more demanding and difficult. Additionally, action recognizers based on 3D skeleton data need to be invariant to factors like 3D Euclidean motions or scaling, which often results in the need for more computationally expensive deep neural network models. Moreover, 3D datasets necessary for training action recognizers are rarely available or have low spatial resolution, particularly in the depth component, making it harder to train accurate models.

The previously mentioned approaches share a common limitation: they are constrained by restricted visibility and pose detection, as poses are often partially obscured or difficult to identify using fixed camera setups, whether relying on a single video feed, a 2D pose stream, or even multiple cameras. Moreover, occlusion may occur, as the view of the person of interest can be temporarily occluded, making accurate pose detection difficult or impossible. For example, the respective person might only be partially visible from a single camera angle, resulting in incomplete or inaccurate pose detection. Even when using multiple cameras, the detected pose might be of low quality and not suitable for reliable action detection. Moreover, observations from multiple cameras are typically not integrated, leading to fragmented or incomplete action recognition data. In some cases, there can also be a sampling rate mismatch between the pose estimation data and the action detection component, as action detection models often require that the sampling rate of the input data matches that of the training dataset. In addition, 2D datasets being used by the 2D and 2+1D approaches provide only a limited view of actions, and as a result, action detectors trained on such datasets may develop biases towards certain perspectives or viewpoints.

### Summary

There may be a desire for providing an improved concept for recognizing actions.

This desire is addressed by the subject-matter of the independent claims.

Various examples of the present disclosure are based on the finding, that 2D action recognizers have several advantages over 3D action recognizers - they are computationally less complex, easier to train, and readily available as off-the-shelf products. To overcome shortcomings of existing 2D action recognizers, a 3D to 2D projection is used to generate at least one sequence of 2D skeletal model representations of an entity, such as a person, an animal, or a robot that show the entity from at least one perspective, , i.e., at least one sequence showing how a 2D skeleton representing the entity changes over time. For example, multiple sequences of 2D skeletal model representations that show the entity from multiple perspectives, or a single sequence of 2D skeletal model representations that is occlusion-free and shows the entity from a perspective that promises good results with the 2D action recognizer being used may be generated. The at least one sequence of 2D skeletal model representations is then processed by a 2D action recognizer, and the output of the 2D action recognizer is used to determine the action that is being performed by the entity. In effect, action recognition is performed by sampling at least one virtual perspective from a sequence of 3D skeletal model representations, i.e., from a sequence showing how a 3D skeleton representing the entity changes over time.

In a first aspect, the proposed concept is embodied in a computer-implemented method for determining an action. The method comprises obtaining a sequence of 3D skeletal model representations of an entity. The method comprises generating, using the sequence of 3D skeletal model representations of the entity, at least one sequence of 2D skeletal model representations of the entity showing the skeletal model of the entity from at least one perspective relative to the entity. The method comprises providing the at least one sequence of 2D skeletal model representations of the entity to a 2D action recognition model. The method comprises providing information on an action being performed by the entity based on an output of the 2D action recognition model.

According to a second aspect, the proposed concept is further embodied in a system for determining the action. The system comprises one or more processors and one or more storage devices, with the system being configured to perform the method introduced above and below. A third aspect of the present disclosure relates to a computer program comprising instructions which, when the program is executed by a computer, cause the computer to carry out the method introduced above and below. A fourth aspect of the present disclosure relates to a non-transitory, computer-readable medium comprising a program code that, when the program code is executed on a processor, a computer, or a programmable hardware component, causes the processor, computer, or programmable hardware component to perform the method introduced above and below.

The proposed concept mitigates the challenges of occlusion, partial visibility, and low-quality detections, as the perspective or perspectives being used can be used to provide a more complete and accurate representation of the entity and their actions. This enables or improves action detection in previously unrecognizable scenarios, as the availability of 3D skeleton data enables accurate action detection even in scenarios where traditional systems would fail due to poor-quality or missing inputs. This also improves the detection performance (i.e., accuracy), e.g. by selecting one or more optimal (virtual) camera positions, using a potentially biased random perspective sampling method to account for multiple viewpoints, and/or by filtering the action detector output to refine and improve recognition results.

By using 2D action recognizers, which are computationally less expensive than 3D models, as they only need to account for invariances like 2D Euclidean motions and scaling, the computational complexity of the action recognition may be kept low. Moreover, as there are high-resolution 2D datasets available, such as NTU RGB+D, which offers high-resolution 2D images, accurate 2D action recognizers can be trained without relying heavily on scarce or low-resolution 3D datasets.

Moreover, with 3D skeleton data available, the proposed concept can be used to generate an arbitrary number of views for training 2D action detectors. This results in detectors that are less biased towards specific viewpoints, improving the generalizability of the action recognizer. Thus, the proposed concept enables the generation of large training datasets from a single 3D skeleton action sequence, which can be used to train action detectors. This significantly enhances the training process and improves detection accuracy without the need for vast amounts of manually labeled training data.

In general, the proposed concept is applicable to any entity being representable by a skeletal model, in the sense that the skeletal model can then be used to recognize an action being performed by the respective entity. In this context, a skeletal model representation is a representation that is used to represent the respective entity with the help of a skeleton (not limited to the anatomical meaning of the term), with the movement of the respective components of the skeleton representing the movement, and thus action being performed, by the entity. For example, the respective 3D and 2D skeletal model representations of the entity may comprise joints and limbs (specialized terms that might not correspond to the anatomical meaning of the respective terms), with the limbs connecting the joints. In particular, the respective 3D and 2D skeletal model representations may comprise the position of the joints of the respective skeletal model representation in a three-dimensional or two-dimensional coordinate system, respectively. The 3D and 2D skeletal model representations are part of sequences of 3D/2D skeletal model representations, i.e., part of a temporally linked set of 3D/2D skeletal model representations representing the movement of the 3D/2D skeletal model, and thus of the entity, over time. The movement of the entity may be represented by a change in the position of at least one joint, and thus also a position and/or orientation of at least one limb connected to the at least one joint, over time, as represented by the respective sequence of 3D and/or 2D skeletal model representations. As the action is being recognized based on the least one sequence of 2D skeletal model representations being derived from the sequence of 3D skeletal model representations, and thus based on the movement of the joints of the respective skeletal model over time, the action is, as such, defined by the movement performed by the respective entity. In other words, the action to be recognized is an action that involves a movement of at least a part or component of the entity, such as a body or torso, a (robotic or biological) arm or leg, a (robotic or biological) head etc. As a result, the entity may be any entity capable of performing an action, self-propelled motion and/or taking a pose, each of which involve at least a part of the entity performing a motion. This movement of the entity is represented by the respective sequences of 3D and 2D skeletal model representations, which are thus used to recognize the action being performed by the entity.

As outlined above, the proposed concept benefits from the ability to derive, from the 3D skeletal model representations, 2D skeletal model representations of the entity from any perspective relative to the entity. This means that a perspective can be chosen, in which the movement of the entity caused by the action has a larger impact on the resulting sequence of 2D skeletal model representations than other perspectives, or a perspective that is in accordance with a training bias of the 2D action recognizer. To determine the perspective or perspectives to use to generate the at least one sequence of 2D skeletal model representations, the sequence of 3D skeletal model representations may be processed and evaluated. For example, the method may comprise determining, based on the sequence of 3D skeletal model representations of the entity, the at least one perspective relative to the entity. The method may comprise generating the at least one sequence of 2D skeletal model representations of the entity based on the determined at least one perspective. For example, this may be done by determining an orientation of at least one 3D skeletal model representation, and selecting the perspective or perspectives such, that the perspective or perspectives match a perspective or perspectives inherent to training data being used to train the 2D action recognition model. In effect, the selection of the at least one perspective may be performed based on a spatial bias of the 2D action recognition model. Alternatively, this may be done by determining, for a plurality of different perspectives, a sum of the lengths of the motion vectors of the respective joints across the sequence of 2D skeletal model representations showing the entity from the respective perspective, and selecting the perspectives based on the sums of the lengths of the motion vectors, e.g., by selecting a perspective or perspectives, in which the motion is clearly visible.

Alternatively, or additionally, the 2D action recognition model may be used to determine the perspectives. For example, during a setup phase, or at the beginning of action recognition for an entity, using sequences of 2D skeletal model representations of a subset (e.g., a window) of a sequence of 3D skeletal model representation, an evaluation may be performed, using the 2D action recognition model, as to which perspective yields an output of the 2D action recognition model having a higher confidence than other perspectives. For example, the method may comprise processing a plurality of sequences of 2D skeletal model representations of the entity using the 2D action recognition model, with the plurality of sequences of 2D skeletal model representations showing the skeletal model of the entity from a plurality of different perspectives. The method may comprise determining the at least one perspective of the entity based on confidence values being output by the 2D action recognition model. This way, a perspective or multiple perspectives can be chosen that lead to high-confidence outputs of the 2D action recognition model.

In some examples, as outlined above, the selected perspective is based on the spatial bias of the 2D action recognition model. This spatial bias may be known a priori, or it may be determined by processing sequences of 2D skeletal model representations showing an entity, such as the entity, for which the action is being recognized, an example entity or a benchmark entity, from different perspectives. In other words, the method may comprise determining, by processing a plurality of sequences of 2D skeletal model representations of the entity using the 2D action recognition model, the spatial bias of the 2D action recognition model. This way, knowledge of the spatial bias of the 2D action recognition model can be used to select the perspective(s) without requiring a priori knowledge on the spatial bias.

In some examples, the selection of perspective(s) may be performed without reference to the sequence of 3D skeletal model representations. In particular, the method may comprise selecting the at least one perspective according to a geometric rule. For example, the perspective(s) may be selected such that they show the entity from a plurality of different perspectives having a pre-defined geometric offset, e.g., a pre-defined angular offset on a unit circle surrounding the entity. Alternatively, the perspective(s) may be selected according to a geometry of a room containing the entity. In another approach, the at least one perspective may be selected randomly. In other words, the method may comprise randomly selecting the at least one perspective relative to the entity.

In various examples of the present disclosure, multiple virtual perspectives, and thus multiple (virtual) camera observations, can be derived from the sequence of 3D skeletal model representations and be used to determine the action using the 2D action recognition model, by (preferably concurrently) feeding multiple sequences of 2D skeletal model representations into one or multiple instances of the 2D action recognition model, and processing the results of the 2D action recognition model for the multiple sequences of 2D skeletal model representations. For example, multiple observations from different (virtual) cameras can be integrated using filtering techniques (such as a Kalman filter), allowing for a more comprehensive analysis. This integration may be based on a confidence or signal response (transfer function) of the 2D action recognition model from different positions (and thus perspectives), improving overall accuracy. For example, multiple samples can be taken from various perspectives according to a chosen sampling strategy, allowing for more efficient use of computational resources while maintaining high detection accuracy. In effect, the proposed concept allows for an improved detection by (optionally) incorporating multiple observations, thus finding a tradeoff between the additional computational complexity and the available computation budget. Furthermore, to lower the computational overhead as part of the tradeoff, frame sampling strategies can be used and missing frames can be interpolated, thus maintaining a balance between performance and efficiency.

In many cases, the 2D action recognition model is applied to the sequence(s) of 2D skeletal model representations in real-time, i.e. as soon as the sequence of 3D skeletal model representations is updated (due to a new skeletal model representation being added over time), the sequence(s) of 2D skeletal model representations is updated as well and input anew into the 2D action recognizer. For this purpose, a sliding window-based mechanism may be used. Thus, the 2D action recognition model may be configured to process the at least one sequence of 2D skeletal model representations by processing a sliding window of 2D skeletal model representations of the at least one sequence of 2D skeletal model representations. As a result, the at least one sequence of 2D skeletal model representations may be generated by extracting a sequence of sliding windows of 2D skeletal model representations to be input into the 2D action recognition model, with each sliding window comprising a subset of 2D skeletal model representations of the respective sequence of 2D skeletal model representations, which may be input into the 2D action recognition model.

The 2D action recognition model may, in turn, then output at least one sequence of classification results, e.g., one sequence of classification results for each sequence of 2D skeletal model representations. For example, the output of the 2D action recognition model may comprise at least one sequence of classification results being generated by the 2D action recognition model in response to the at least one sequence of 2D skeletal model representations of the entity. For example, each classification result of the respective sequence may be based on a subset of 2D skeletal model representations according to the sliding window being used to prepare the 2D skeletal model representations for the 2D action recognition model. The method may further comprise storing information on the at least one sequence of classification results. The method may further comprise determining the action being performed by the entity based on the stored information on the at least one sequence of classification results. By generating and storing the sequence(s) of classification results, filters, voting mechanisms, further machine-learning models, etc. can be applied to the classification results, yielding an improved action recognition performance.

For example, the method may comprise applying a filter on the at least one sequence of classification results or on the stored information on the at least one sequence of classification results. Such a filter may be used for, and thus configured for, different purposes, such as removing classification results, creating a sliding window of classification results, dynamically weighting classification results according to their confidence values etc. In some examples, the filter may comprise at least one of a Kalman filter and a machine learning-based filter. Such filters are known to provide good filtering for filtering time-series or real-time data, such as the sequence(s) of 2D skeletal model representations.

To further improve the classification capabilities of the proposed concept, multiple classification results may be combined and used to determine the action being performed by the entity. In other words, the at least one sequence of classification results may comprise a plurality of classification results, and the method may comprise determining the action being performed based on the plurality of classification results. For example, the plurality of classification results may be based on two or more different sequences of 2D skeletal model representations, and thus based on two or more different perspectives. Additionally, or alternatively, the plurality of classification results may be based on two or more different points in time. For example, the action being performed may be determined, based on the plurality of classification results, using at least one of a deterministic voting scheme (e.g., based on a majority or a weighted majority among the plurality of classification results), a rule-based scheme based on recency of the respective classification results, and a machine learning-based voting mechanism. Using multiple classification results to determine the action being performed by the entity improves the reliability of the determined action. The proposed schemes (deterministic voting scheme, rule-based scheme based on recency and machine learning-based voting) were shown to provide good results in determining the action being performed by the entity.

The proposed concept is based on the using a sequence of 3D skeletal model representations of the entity to generate at least one sequence of 2D skeletal model representations showing the entity from at least one perspective. This sequence of 3D skeletal model representations that is used by the proposed concept may be provided by, and thus obtained (e.g., received) from, another system or algorithm, or may be generated as part of the method. In other words, the method may comprise generating the sequence of 3D skeletal model representations of the entity. In particular, the method may comprise generating the sequence of 3D skeletal model representations of the entity based on a plurality of sequences of 2D skeletal model representations of the entity. For example, the approach disclosed in European patent application EP 4044118 A1 may be used for this purpose. For example, using the approach shown in EP 4044118 A1, knowing the observation angles of the plurality of sequences of 2D skeletal model representations (i.e., two-dimensional pose estimation data), triangulation may be used to determine the position of joints and limbs of the entity in a three-dimensional coordinate system, and thus to generate the sequence of 3D skeletal model representations (denoted three-dimensional pose estimation data in EP 4044118 A1). In some examples, the method may comprise generating the sequence of 3D skeletal model representations of the entity based on a plurality of sequences of images of the entity showing the entity from different perspectives. This may be done by determining the plurality of sequences of 2D skeletal model representations from the plurality of sequences of images, e.g., using a 2D pose estimation model, and triangulating the position of the joints of the resulting sequences of 2D skeletal model representations to obtain the sequence of 3D skeletal model representations. In addition, filtering, such as a Kalman filter for smoothing, and further constraints may be applied. This way, the proposed concept can be applied to existing sequences of 2D skeletal model representations and/or existing sequences of images, thus improving the applicability of the proposed concept to existing data representing the movement of the entity.

In another approach, instead of processing real-world images or 2D skeletal model representations derived from real-world images, data from a computer-simulated space showing the entity in a computer-simulated space may be used. In particular, the method may comprise generating the sequence of 3D skeletal model representations of the entity from a representation of the entity in a game engine, virtual reality environment or augmented reality environment. For example, the 3D skeletal model may be extracted directly from the game engine, virtual reality environment or augmented reality environment, and entities are often represented by 3D skeletal models in such environments to allow for realistic movement of the entity. Alternatively, images sequences provided by the game engine, virtual reality environment or augmented reality environment showing the entity from multiple perspectives may be processed using a 2D pose estimation model, and the joints included in the resulting 2D skeletal model representations may be triangulated to determine the sequence of 3D skeletal model representations. This way, the proposed concept can be applied in an even wider variety of use cases, such as virtual environments.

In the proposed concept, an approach is used, in which, instead of using 2D skeletal model representations generated directly from a sequence of 2D or 2+1D images, the 2D skeletal model representations are derived from a 3D skeletal model representation. This synthetic generation of the 2D skeletal model representations provides the opportunity to further improve the quality of the 2D skeletal model representations being input into the 2D action recognition model. In particular, the method may comprise resampling or generating the sequence of 3D skeletal model representations of the entity or the at least one sequence of 2D skeletal model representations of the entity according to a framerate expected by the 2D action recognition model, allowing for a flexible sampling rate adjustment. The proposed concept enables the sampling rate to be dynamically adjusted using techniques like interpolation or filtering (e.g., Kalman filtering), ensuring it aligns with the training dataset, thus improving detection performance. This way, arbitrary 2D action recognition models may be used in the proposed concept, allowing the re-use of existing models regardless of the original framerate of the source image sequence or source sequences of 2D skeletal model representations.

The proposed concept for determining the action can be used for various purposes. In particular, the proposed concept may be used as part of security monitoring of specific areas, such as airports, public transport stations etc., to detect persons performing suspicious actions. Furthermore, the proposed concept may be used as part of security monitoring in industrial or construction sites, to detect persons performing actions that are not permitted in the respective industrial or construction site. Accordingly, the determination of the action performed by the entity may be performed on a sequence of 3D skeletal model representations derived from sequences of images provided by two or more security cameras.

Accordingly, the result of the determination of the action can be used as part of the security measures, e.g., to allow or disallow an animal or person to use a machine. For example, the method may comprise triggering or unblocking execution of an action to be performed by a machine after determining that an action or sequence of actions has been performed by the entity. For example, the machine may be an opening or locking mechanism of a door, gate or checkpoint, and the action being performed by the entity may be related to the entity (e.g., person) having performed a pre-defined procedure, such as putting on a hard hat or hairnet, putting on cleanroom clothing, or washing hands (before surgery or food preparation). In another example, the machine may be an industrial machine, such as a hydraulic press or a mechanical cutter, and the action being performed by the entity may be related to the entity (e.g., person) having performed a pre-defined procedure, such as removing the result of a previous actuation of the industrial machine or having cleared a security perimeter.

In another use case, the proposed concept may be used to generate (parts of) training data for a machine learning procedure. In particular, the proposed concept may be used for labeling data, such as the sequence of 3D skeletal model representations of the entity, sequences of 2D skeletal model representations of the entity (either or both of the sequences of 2D skeletal model representations of the entity used to generate the sequence of 3D skeletal model representations and the sequence(s) of 2D skeletal model representations of the entity derived from the 3D skeletal model representations). In other words, providing the information on an action being performed by the entity may comprise annotating or labeling the sequence of 3D skeletal model representations, a plurality of sequences of 2D skeletal model representations of the entity, or a plurality of sequences of images of the entity showing the entity from different perspectives using the action being performed by the entity for use in machine learning, and in particular supervised or semi-supervised learning. Further optionally, the method may comprise training a 2D or 3D action recognition model using the labeled or annotated data. This way, improved action recognition models can be trained.

### Brief Description of the Figures

There are several ways how to design and further develop the teaching of the present disclosure an advantageous way. To this end, it is to be referred to the patent claims subordinate to patent claim 1 on the one hand and to the following explanation of examples of the proposed concept, illustrated by the Figures on the other hand. In the Figures,
- Figs. 1a and 1b: show flow charts of examples of a computer-implemented method for determining an action being performed by an entity;
- Fig. 1c: shows a block diagram of an example of a system for determining an action being performed by an entity;
- Fig. 2: shows a schematic diagram of a person being observed by multiple cameras;
- Fig. 3: shows another schematic diagram of a person being observed by multiple cameras;
- Fig. 4a: shows a schematic diagram of a 2D skeletal model representation of a person performing an action; and
- Fig. 4b: shows a graph illustrating confidence levels output by a 2D action recognizer for different perspectives relative to an entity.

### Detailed Description of the Figures

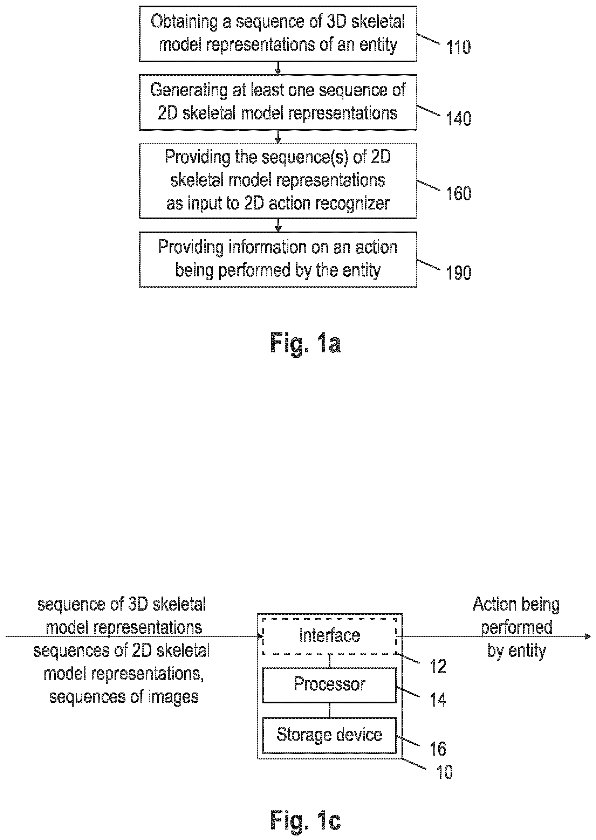

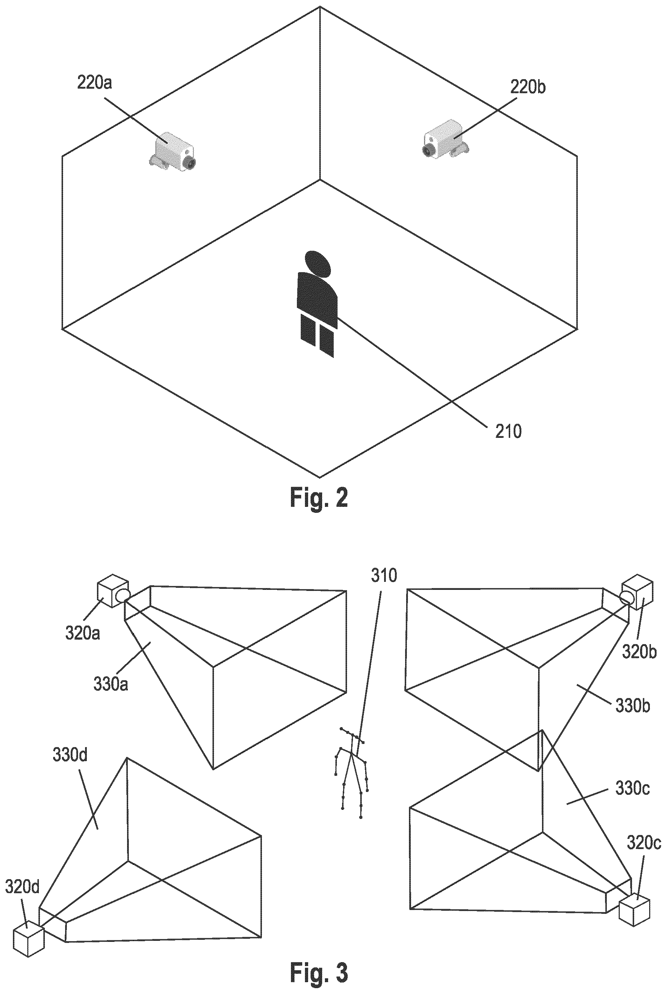

The present disclosure relates to a concept for determining an action being performed by an entity, such as a person, an animal or a robot. This concept is embodied by the method and system shown in Figs. 1a to 1c. It will be illustrated in more detail in connection with Figs. 2 to 4b.

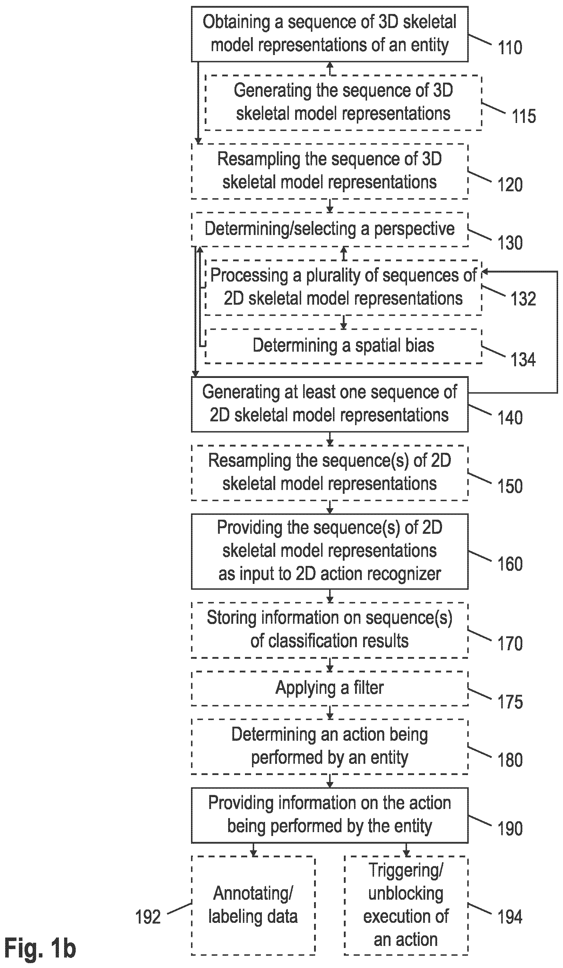

Figs. 1a and 1b show flow charts of examples of a computer-implemented method for determining an action being performed by an entity. The method comprises obtaining 110 a sequence of 3D skeletal model representations of an entity. The method comprises generating 140, using the sequence of 3D skeletal model representations of the entity, at least one sequence of 2D skeletal model representations of the entity showing the skeletal model of the entity from at least one perspective relative to the entity. The method comprises providing 160 the at least one sequence of 2D skeletal model representations of the entity to a 2D action recognition model. The method comprises providing 190 information on an action being performed by the entity based on an output of the 2D action recognition model.

Fig. 1c shows a block diagram of an example of a corresponding system 10 for determining the action being performed by the entity. The system comprises one or more processors 14 and one or more storage devices 16. Optionally, the system 10 comprises one or more interfaces 12. The one or more processors 14 are coupled to the one or more interfaces 12 and to the one or more memory/storage devices 16. The system is configured to perform the method of at least one of Figs. 1a and/or 1b.

For example, the one or more interfaces 12 may include or correspond to a network interface circuitry and/or a device interface circuitry configured to be communicatively coupled to one or more other devices, such as the one or more processors 14. For example, the one or more interfaces 12 may include a transmitter, a receiver, or a combination thereof (e.g., a transceiver), and may enable wired communication, wireless communication, or a combination thereof. For example, the one or more processors 14 may include or correspond to one or more of a digital signal processor circuitry (DSP), a graphical processing unit (GPU), and/or a central processing unit (CPU). For example, the one or more memory/storage devices 16 may include or correspond to volatile or nonvolatile storage circuitry, such as Random Access Memory (RAM), magnetic disks, optical disks, or flash memory devices. The one or more memory/storage devices 16 may include both removable and non-removable memory devices.

In various examples, the system 10 is configured to perform the method according to Figs. 1a and/or 1b. In general, the functionality of the system 10 may be provided by the one or more processors 14 performing the respective functionality, in conjunction with the one or more interfaces (for exchanging information with entities inside and/or outside the system 10) and/or the one or more memory/storage devices 16 (for storing information, such as machine-readable instructions). For example, the one or more interfaces 12 may be used, by the one or more processors 14, to obtain one or more images from one or more cameras, such as cameras 220a; 220b; 320a-d shown in Figs. 2-3. For example, the one or more processors 14 may be configured to execute machine-readable instructions stored in the memory/storage circuitry 16, with the machine-readable instructions specifying the functionality being performed by the one or more processors. For example, the system 10 may be a computer system.

In the following, the method of Figs. 1a and/or 1b, and thus the functionality of the system 10 of Fig. 1c, is explained in more detail with respect to a concrete algorithm that implements the method. This algorithm is illustrated in connection with Figs. 2 to 4b.

In the example illustrated in Figs. 2 to 4b, the proposed concept leverages a setup of N synchronized traditional non-stereo cameras and (server) software capable of performing 2D pose estimation (to obtain 2D skeletal model representations) on each perspective, followed by the integration of these perspectives into a 3D (human) pose estimate (i.e., the sequence of 3D skeletal model implementations). The processing of the 2D images, 2D pose estimation and/or 3D pose estimation, which are described in the following, may be performed prior to the method of Figs. 1a and/of 1b or as part of the method of Figs. 1a and 1b.

The example shown in connection with Figs. 2 to 4b starts with the initial setup and the acquisition of the 3D poses (i.e., the 3D skeletal model representations). The camera system being used, and illustrated in Figs. 2 and 3, comprises N synchronized cameras (e.g., 16 in a deployment being tested) that record video data from different angles. These cameras capture a sequence of frames (images) that are then processed to estimate 2D poses from each perspective. Figs. 2 and 3 show schematic diagrams of a person 210; 310 being observed by multiple cameras 220a-220b, 320a-320d. Fig. 3 further shows cones 330a-330d illustrating the fields of view, and thus perspectives, of the respective cameras 320a-320d.

The (server) software aggregates the 2D poses (2D skeletal model representations) from each camera into a unified 3D pose (3D skeletal model representation) using existing 3D pose estimation algorithms. The result is a 3D skeleton sequence (i.e., the sequence of 3D skeletal model representations) for each subject (i.e., entity) in the scene. For example, each scene may include a plurality of entities, with a sequence of 3D skeletal model representations being obtained (e.g., generated) for each or some of the entities. The 3D skeletons are associated with timestamps and identifiers (e.g., from a 3D tracker) to differentiate between multiple subjects.

If the method includes the determination of the sequence of 3D skeletal model representations from camera data, the method of Fig. 1b may further comprise generating 115 the sequence of 3D skeletal model representations of the entity based on a plurality of sequences of 2D skeletal model representations of the entity. To obtain the plurality of sequences of 2D skeletal model representations of the entity, the method may comprise obtaining a plurality of image sequences of a plurality of cameras and determining the plurality of sequences of 2D skeletal model representations of the entity by processing the plurality of sequences of images (of the N cameras) using a 2D pose estimation algorithm. Existing 3D pose estimation algorithms may then be used to generate the sequence of 3D skeletal model representations from the plurality of sequences of 2D skeletal model representations.

In some examples, resampling may be performed. If necessary, the 3D skeleton sequence may be resampled to match the expected input frame rate of the 2D action recognizer (2D action recognition model). Thus, the method of Fig. 1b may comprise resampling 120 or generating the sequence of 3D skeletal model representations of the entity according to a framerate expected by the 2D action recognition model. Alternatively, the method of Fig. 1b may comprise resampling 140 or generating the at least one sequence of 2D skeletal model representations of the entity according to the framerate expected by the 2D action recognition model. This ensures compatibility between the data being fed into the recognizer and its internal processing requirements.

The resampled 3D skeleton sequence may be stored in a historical buffer (History Storage), allowing for reprocessing or future analysis based on additional perspectives or conditions.

Next, the perspective(s) to be used for generating the sequence(s) of 2D skeletal model representations is/are selected 130 (see Fig. 1b) through a process denoted "perspective sampling". The proposed concept uses a 3D dataset that is not RGB-D but instead relies on multiple synchronized video perspectives of a shared scene. Those recordings are integrated real-time into a 3D reconstruction, and from this reconstruction, search is performed according to a sampling strategy to find one or more appropriate 2D perspectives that are used as input for existing action recognition networks. In particular, the sampling strategy is employed to simulate virtual cameras at different viewing angles (i.e., perspectives) around the 3D skeleton. The virtual cameras can be configured based on position or field of view to ensure coverage of multiple perspectives. For example, a first sampling strategy is based on stationary camera(s), in which the virtual camera(s) are set to a fixed position (e.g. relative to the skeleton or to an absolute position) with a fixed orientation and fixed camera parameters (e.g. field of view, up direction). In this case, the at least one perspective is selected according to a geometric rule, e.g., as defined by the fixed position and fixed orientation. For example, the virtual cameras may be arranged on a unit circle surrounding the entity, with the cameras being placed at fixed angular offsets (e.g., 45 degrees, 60 degrees, 90 degrees, or 120 degrees) on the unit circle. Other geometric rules are also possible.

Another sampling strategy is denoted random sampling. In random sampling, the camera is placed at random locations that capture the skeleton. In this case, the at least one perspective is selected 130 randomly. For example, the camera can be placed on a circle around the skeleton at waist level, with the camera parameters adjusted to approximately fill the virtual camera frame with the skeleton.

Two further sampling strategies use the sequence of 3D skeletal model representations to determine the perspective(s) being used to generate the sequence(s) of 2D skeletal model representations. In other words, the at least one perspective relative to the entity may be determined based on the sequence of 3D skeletal model representations of the entity

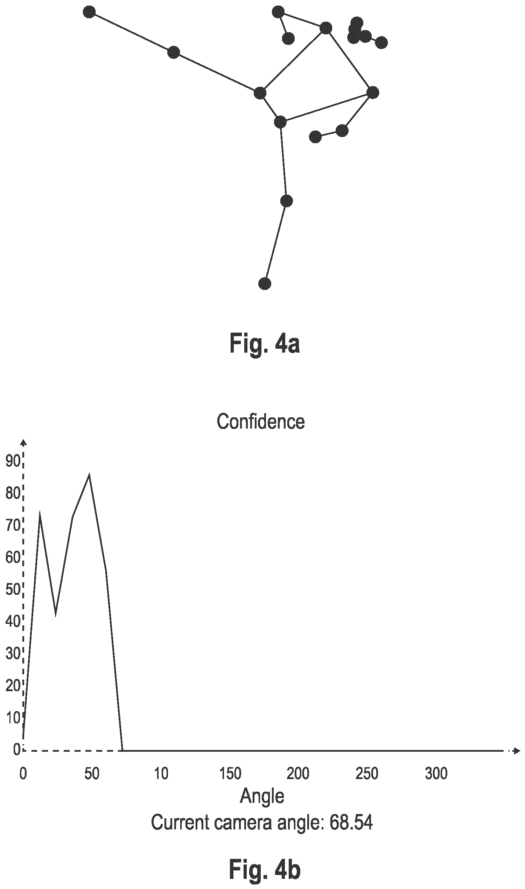

The first such sampling strategy is denoted bias-adapted sampling: Given information about the bias of an action recognizer (for example, it might perform better when the skeleton is viewed from specific positions), the virtual camera can be randomly placed (as described above), with a bias towards these positions. In this case, the selection 130 of the at least one perspective is performed based on the spatial bias of the 2D action recognition model. This spatial bias may be known a priori or can be determined using a brute-force approach, by processing sequences of 2D skeletal model representations from different perspectives and using a confidence value output by the 2D action recognition model to determine the spatial bias of the 2D action recognition model (see also Figs. 4a and 4b). In other words, as shown in Fig. 1b, the method may comprise determining 134, by processing 132 a plurality of sequences of 2D skeletal model representations of the entity using the 2D action recognition model, the spatial bias of the 2D action recognition model.

A fourth perspective sampling strategy is denoted dynamic optimal perspective sampling: If the bias of the action recognizer is not known, then a strategy to simultaneously estimate the detector's bias and the actions can be employed to obtain the optimal camera position and parameters. Thus, the method may comprise processing 132 a plurality of sequences of 2D skeletal model representations of the entity using the 2D action recognition model (with the plurality of sequences of 2D skeletal model representations being derived from the sequence of 3D skeletal model representations), with the plurality of sequences of 2D skeletal model representations showing the skeletal model of the entity from a plurality of different perspectives, and determining 130 the at least one perspective of the entity based on confidence values being output by the 2D action recognition model. This can be done e.g. via first random sampling, over time leading to a mapping of the detector's bias, and then transitioning to a bias-adapted strategy. The bias may be further continuously estimated during the bias-adapted sampling.

The concept is illustrated in Fig. 4a and Fig. 4b. Fig. 4a shows a schematic diagram of a 2D skeletal model representation of a person performing an action (a person performing a kicking motion) and Fig. 4b shows a graph illustrating confidence levels output by a 2D action recognizer for different perspectives relative to an entity. In the diagram of Fig. 4, the y-axis denotes confidence, and the x-axis denotes angle or rotation in degrees. The sampling strategy shown here is an example of the dynamic optimal perspective sampling strategy, progressing through a full rotation around the subject (i.e., the entity, person). The action recognition network (i.e., the 2D action recognition model) is then applied, and the resulting action recognition confidence is plotted. As Fig. 4b reveals, the confidence varies significantly with the viewing angle (perspective) on the subject.

These strategies generally lead to a set of camera parameters (e.g., camera position, orientation, and field of view, and thus perspective) for one or more virtual cameras that will "view" the 3D skeleton.

For each set of virtual camera parameters (i.e., for each perspective determined using the sampling strategy of choice), the 3D skeleton (potentially including parts of the history) is projected onto the corresponding 2D plane (using 2D projection), simulating the perspective of the virtual camera, to generate 140 the sequences of 2D skeletal model representations. These projections represent different 2D views of the subject's actions. Each 2D skeleton projection may be temporarily stored in a history of 2D skeletons, and used as 2D pose input to the action recognizer: The 2D history (i.e., the respective sequences of 2D skeletal model representations) is passed onwards into a pre-trained 2D neural network action recognizer. The action recognizer processes the 2D pose data to produce action detection results (classification results), potentially including a confidence score for each action. If there is no confidence score available, it is assumed to be set to one. To determine the classification results, a sliding window technique may be used. In other words, the 2D action recognition model may be configured to process the at least one sequence of 2D skeletal model representations by processing a sliding window of 2D skeletal model representations of the at least one sequence of 2D skeletal model representations.

Using the output of the 2D action recognizer, a detection history may be created, which may be filtered. In particular, the action detection results from each virtual camera perspective may be stored in the detection history, which may include the confidence scores and associated virtual camera parameters. For example, the output of the 2D action recognition model may comprise at least one sequence of classification results being generated by the 2D action recognition model in response to the at least one sequence of 2D skeletal model representations of the entity, with the sequence of classification results representing the history of classification results for the 2D skeletal model representation being processed by the 2D action recognition model. For example, for each window of 2D skeletal model representations, the 2D action recognition model may output a classification result. Due to the sliding window technique, a sequence of classification results may be output for each sequence of 2D skeletal model representations, the sequence of classification results comprising one classification result per window of 2D skeletal model representations. Information on the at least one sequence of classification results may be stored in the detection history, and the action being performed may be determined 180 based on the stored at least one sequence of classification results.

The detection history may then be passed through a filtering process to refine the results. In other words, the method of Fig. 1b may comprise applying 175 a filter on the at least one sequence of classification results or on the stored information on the at least one sequence of classification results. The purpose of the filtering may include removing outlier classification results. Examples of suitable filtering strategies include a pass-through filter-based strategy, in which a simple pass-through filter can be applied, leaving the detection results unmodified. Another filtering strategy is a Kalman filter-based filtering strategy, in which a Kalman filter is employed to smooth the detection results over time, e.g., applied on both or either of the confidence score and an uncertainty metric (based on the action recognizer and camera parameters) as input. Thus, the filter may comprise a Kalman filter. In another approach, a neural network can be trained to further filter and refine the action detection results based on past data, improving robustness against noisy or ambiguous results. In other words, the filter may include a machine learning-based filter, e.g., a machine learning-based outlier detection filter being used to remove outliers.

Once the sampling is complete, and enough samples are obtained, e.g., when the at least one sequence of classification results comprises a plurality of classification results, a post-processing strategy may be applied to the action recognizer's output.

This can be a trivial strategy using the last action recognition result, or a more complex strategy such as majority vote based on a history of multiple recognitions outputs - these approaches are described in the following.

For example, a voting scheme may be used to determine the final detected action based on the filtered detection history. In other words, the method may comprise determining 180 the action being performed based on the plurality of classification results using a voting scheme. Various voting strategies/schemes can be employed.

For example, a most recent detection-based voting scheme may be used, in which the final action is taken as the most recent detection in the sequence. In other words, the action being performed may be determined 180 based on the plurality of classification results using a rule-based scheme based on recency.

Alternatively, a majority-vote (the most frequently detected action in the last N frames can be chosen as the final action) or weighted majority-vote (a weighted version of majority voting, giving more weight to higher-confidence detections or more recent detections)-based voting scheme may be used. In other words, the action being performed may be determined 180 based on the plurality of classification results using a deterministic voting scheme, such as a deterministic voting scheme based on a majority or a weighted majority among the plurality of classification results.

As further option, a neural network voting-based voting scheme may be used, in which a neural network is trained, e.g., using supervised learning, to analyze the filtered detection history and predict the final action based on the sequence of confidence scores and detected actions over time. In other words, the action being performed may be determined 180 based on the plurality of classification results using a machine learning-based voting mechanism.

The proposed concept may be implemented using a capture setup of N Synchronized Traditional (i.e. 2D) Cameras: The camera system may be used to capture multi-view data from multiple angles. It may use a pose estimation system to perform 2D Pose Estimation on the recorded data from each camera, and 3D Pose Integration, by integrating the 2D pose estimates into a 3D pose sequence representing human skeletons. These operations are optional with respect to the method of Figs. 1a and 1b, as the method of Fig. 1a and 1b can operate on a sequence of 3D skeletal model representations provided by another system.

In the proposed concept, a sampling strategy may be used to select the perspective(s) being used to generate the sequences of 2D skeletal model representations, with a virtual camera system that simulates different viewing angles around the 3D pose to generate 2D projections and optional perspective sampling that ensures broad coverage and, depending on the selected sampling strategy, can select optimal virtual camera parameters (e.g., viewing angle, field of view) for action recognition. A pre-trained 2D neural network may be used for 2D action recognition to recognize actions based on the 2D projections of the skeleton. A detection history may be used to store action recognition results for different perspectives, and a filter strategy, including options such as pass-through, Kalman filters, and neural network filters, may be used for smoothing and refining detections. As part of postprocessing, a voting mechanism, employing strategies like majority vote, weighted vote, or neural network prediction, may be used to determine the most likely action based on multiple 2D perspectives.

The proposed concept introduced in connection with Fig. 2 to 4b may be extended, leveraging different data inputs, resource constraints, and potential extensions to broaden the applicability and performance of the algorithm in various environments.

For example, the determined actions may be used for automated annotation in multi-camera setups. The algorithm can be used to automatically annotate and recognize actions across multiple camera viewpoints. In other words, providing 190 the information on an action being performed by the entity may comprise annotating or labeling 192 the sequence of 3D skeletal model representations, a plurality of sequences of 2D skeletal model representations of the entity, or a plurality of sequences of images of the entity showing the entity from different perspectives using the action being performed by the entity for use in machine learning. In this extension, the algorithm can integrate data from different camera feeds, improving the robustness and accuracy of action recognition by synthesizing multiple perspectives. This feature is particularly useful in environments like sports analysis, security surveillance, or behavioral studies.

In another extension, the result of the action detection may be part of a security mechanism that is used to trigger or unblock functionality if the entity, e.g., the person, has performed a pre-defined action or sequence of actions. For example, the method may comprise triggering or unblocking 194 execution of an action to be performed by a machine after determining that an action or sequence of actions has been performed by the entity. For example, the door to an operating room may be unlocked for a surgeon once the surgeon has washed their hands. In another example, control of an industrial or construction machine may be unblocked once the operator has performed a security check (e.g., in the perimeter of the industrial or construction machine).

In the previous examples, it was assumed that the proposed concept is applied to real-time data, to perform real-time action detection. However, the proposed concept may also be applied offline (offline processing). The algorithm can be run in an offline mode, allowing for post-processing of recorded data. In this case, the system does not need to operate in real time, which can be advantageous in scenarios where computational resources are limited or where detailed analysis is needed over large datasets. Offline processing also allows for batch processing of data, potentially leading to higher accuracy as the algorithm can allocate more resources for each action recognition task.

Another assumption of the algorithm discussed in connection with Figs. 2 to 4b is that the sequence of 3D skeletal model representations is determined by processing real-would 2D images and integrating the 2D poses derived from the 2D images. However, the proposed concept may also be applied in virtual environments, e.g., using game engine integration for Augmented Reality (AR) or Virtual Reality (VR) applications. The output of game engines can serve as a direct input to the algorithm, allowing it to be used in synthetic environments. Thus, as further shown in Fig. 1b, the method may comprise generating 115 the sequence of 3D skeletal model representations of the entity from a representation of the entity in a game engine, virtual reality environment or augmented reality environment. This mode of operation enables the algorithm to be utilized in augmented reality (AR) and virtual reality (VR) scenarios, where real-time or simulated actions need to be recognized for interaction purposes. For example, in AR-based training or simulation environments, the algorithm can track user actions and provide feedback or adapt the virtual environment based on the recognized actions.

In some examples, interpolation and upsampling for low-resource environments may be performed as part of the proposed concept. In environments with limited computational power or lower frame rates, the algorithm can be adapted to work with interpolated or upsampled 3D data. This allows the system to function effectively even when the input data is sparse or of lower quality. Additionally, a detector-dependent optimal detection angle can be employed to improve recognition accuracy, ensuring the system operates efficiently under constrained conditions. This approach is beneficial in mobile applications or embedded systems where real-time processing power is limited.

Assuming that timestamped 3D skeletons, i.e., the sequence of 3D skeletal model representations, are available, the proposed concept may comprise one or more of Pose resampling, in which the 3D pose is filtered to match the input rate of the action recognizer, 3D pose history, in which the filtered 3D pose is stored in a history of size K, 2D pose generation, in which Poses from the 3D pose history are projected to a plane using a virtual camera, action detection, in which the projected poses are processed by an action recognition neural network, and the results are stored in a detection history, and detection postprocessing, in which the detection history is filtered to determine the most likely action.

Examples may involve or relate to computer programs, including program codes to execute one or more of the mentioned methods when the program is executed on a computer, processor, or other programmable hardware component. As a result, steps, operations, or processes from various methods described above can also be executed by computers, processors, or other programmable hardware components. Examples may additionally cover program storage devices, such as digital data storage media, which are machine-, processor-, or computer-readable and encode and/or contain machine-executable, processor-executable, or computer-executable programs and instructions. These devices may include or be digital storage devices, magnetic storage media like magnetic disks and tapes, hard disk drives, or optically readable digital data storage media, for instance. Other examples encompass computers, processors, control units, field programmable logic arrays (FPLAs), field programmable gate arrays (FPGAs), graphics processing units (GPUs), application-specific integrated circuits (ASICs), integrated circuits (ICs), or system-on-a-chip (SoC) systems that are programmed to carry out the operations of the aforementioned methods. In simpler terms, examples may involve computer programs and storage media comprising computer programs, as well as hardware components like processors and control units, which can be programmed to execute the methods described above.

When certain aspects are mentioned in relation to a device or system, they should also be considered as descriptions of the corresponding methods. For example, a block, component, or functional aspect of the device or system may correspond to a method operations or feature of the related method. Therefore, aspects described regarding a method should also be understood as depicting a corresponding element, property, or functional feature of the corresponding device or system. In simpler terms, if something is described in relation to a device or system, it can also be applied to the corresponding method, and vice versa.

Many modifications and other embodiments of the invention set forth herein will come to mind to the one skilled in the art to which the invention pertains having the benefit of the teachings presented in the foregoing description and the associated drawings. Therefore, it is to be understood that the proposed concept is not to be limited to the specific examples disclosed and that modifications and other examples are intended to be included within the scope defined by the appended claims. Although specific terms are employed herein, they are used in a generic and descriptive sense only and not for purposes of limitation.

### Reference Numerals

- 10: System
- 12: Interface
- 14: Processor
- 16: Memory/storage
- 110: Obtaining a sequence of 3D skeletal model representations
- 115: Generating the sequence of 3D skeletal model representations
- 120: Resampling the sequence of 3D skeletal model representations
- 130: Determining/selecting a perspective
- 132: Processing a plurality of sequences of 2D skeletal model representations
- 134: Determining a spatial bias
- 140: Generating at least one sequence of 2D skeletal model representations
- 150: Resampling the sequence(s) of 2D skeletal model representations
- 160: Providing the sequence(s) of 2D skeletal model representations as input to 2D action recognizer
- 170: Storing information on sequence(s) of classification results
- 175: Applying a filter
- 180: Determining an action being performed by an entity
- 190: Providing information on the action being performed by the entity
- 192: Annotating/labeling data
- 194: Triggering/unblocking execution of an action
- 210: Entity, person
- 220a, 220b: Camera
- 310: Entity
- 320a-d: Camera
- 330a-d: Field of view, perspective of camera

## Claims

1. A computer-implemented method for determining an action, the method comprising:
obtaining (110) a sequence of 3D skeletal model representations of an entity;
generating (140), using the sequence of 3D skeletal model representations of the entity, at least one sequence of 2D skeletal model representations of the entity showing the skeletal model of the entity from at least one perspective relative to the entity;
providing (160) the at least one sequence of 2D skeletal model representations of the entity to a 2D action recognition model; and
providing (190) information on an action being performed by the entity based on an output of the 2D action recognition model.

2. The method according to claim 1, wherein the entity is capable of at least one of performing an action, self-propelled motion and taking a pose,
and/or wherein the entity is an entity being representable by a skeletal model, and/or wherein the entity is one of a person, an animal and a robot.

3. The method according to one of the claims 1 or 2, wherein the method comprises determining (130), based on the sequence of 3D skeletal model representations of the entity, the at least one perspective relative to the entity, and generating (140) the at least one sequence of 2D skeletal model representations of the entity based on the determined at least one perspective.

4. The method according to claim 3, wherein the method comprises processing (132) a plurality of sequences of 2D skeletal model representations of the entity using the 2D action recognition model, the plurality of sequences of 2D skeletal model representations showing the skeletal model of the entity from a plurality of different perspectives, and determining (130) the at least one perspective of the entity based on confidence values being output by the 2D action recognition model.

5. The method according to one of the claims 1 or 2, wherein the method comprises selecting (130) the at least one perspective according to a geometric rule, or randomly selecting the at least one perspective relative to the entity.

6. The method according to claim 5, wherein the selection of the at least one perspective is performed based on a spatial bias of the 2D action recognition model.

7. The method according to one of the claims 1 to 6, wherein the output of the 2D action recognition model comprises at least one sequence of classification results being generated by the 2D action recognition model in response to the at least one sequence of 2D skeletal model representations of the entity, the method comprising storing (170) information on the at least one sequence of classification results, and determining (180) the action being performed by the entity based on the stored information on the at least one sequence of classification results.

8. The method according to claim 7, wherein the method comprises applying (175) a filter on the at least one sequence of classification results or on the stored information on the at least one sequence of classification results,
wherein the filter is configured to remove outlier classification results,
and/or wherein the filter comprises at least one of a Kalman filter and a machine learning-based filter.

9. The method according to one of the claims 7 or 8, wherein the at least one sequence of classification results comprises a plurality of classification results, wherein the method comprises determining (180) the action being performed based on the plurality of classification results using a deterministic voting scheme, using a rule-based scheme based on recency of the respective classification results, or using a machine learning-based voting mechanism.

10. The method according to one of the claims 1 to 9, wherein the method comprises generating (115) the sequence of 3D skeletal model representations of the entity based on a plurality of sequences of 2D skeletal model representations of the entity and/or based on a plurality of sequences of images of the entity showing the entity from different perspectives,
or wherein the method comprises generating (115) the sequence of 3D skeletal model representations of the entity from a representation of the entity in a game engine, virtual reality environment or augmented reality environment.

11. The method according to one of the claims 1 to 10, wherein the method comprises resampling (120; 140) or generating the sequence of 3D skeletal model representations of the entity or the at least one sequence of 2D skeletal model representations of the entity according to a framerate expected by the 2D action recognition model.

12. The method according to one of the claims 1 to 11, wherein providing the information on an action being performed by the entity comprises annotating or labeling (192) the sequence of 3D skeletal model representations, a plurality of sequences of 2D skeletal model representations of the entity, or a plurality of sequences of images of the entity showing the entity from different perspectives using the action being performed by the entity for use in machine learning.

13. The method according to one of the claims 1 to 12, wherein the method comprises triggering or unblocking (194) execution of an action to be performed by a machine after determining that an action or sequence of actions has been performed by the entity.

14. A system (10) for determining an action, the system comprising one or more processors (14) and one or more storage devices (16), wherein the system is configured to perform the method according to one of the claims 1 to 13.

15. A computer program comprising instructions which, when the program is executed by a computer, cause the computer to carry out the method according to one of the claims 1 to 13.
